# EUROPÄISCHE PATENTSCHRIFT

(11) **EP 3 391 024 B1**
(45) Veröffentlichungstag und Bekanntmachung des Hinweises auf die Patenterteilung: **20.04.2022**
(21) Anmeldenummer: 16809356.5
(22) Anmeldetag: 07.12.2016
(51) Int. Cl.: G01N 15/06

(54) **ELEKTROSTATISCHER RUSSSENSOR**
ELECTROSTATIC SOOT SENSOR
CAPTEUR DE SUIE ÉLECTROSTATIQUE

(30) Priorität: 17.12.2015 DE 102015225745
(43) Veröffentlichungstag der Anmeldung: 24.10.2018
(73) Patentinhaber: Vitesco Technologies GmbH, 93055 Regensburg (DE)
(72) Erfinder: ZHANG, Hong, 93105 Tegernheim (DE)
(74) Vertreter: Vitesco Technologies
(86) Internationale Anmeldenummer: PCT/EP2016/080094
(87) Internationale Veröffentlichungsnummer: WO 2017/102505

(56) Entgegenhaltungen:
- EP-A2- 2 511 690
- US-A1- 2009 090 622
- US-A1- 2010 005 880

## Beschreibung

Die Erfindung betrifft einen elektrostatischen Rußsensor sowie ein Verfahren zum Betreiben eines elektrostatischen Rußsensors.

Die Verringerung von Abgasemissionen bei Kraftfahrzeugen ist ein wichtiges Ziel bei der Entwicklung neuer Kraftfahrzeuge. Daher werden Verbrennungsprozesse in Brennkraftmaschinen thermodynamisch optimiert, so dass der Wirkungsgrad der Brennkraftmaschine deutlich verbessert wird. Im Kraftfahrzeugbereich werden zunehmend Dieselmotoren eingesetzt, die, bei moderner Bauart, einen sehr hohen Wirkungsgrad aufweisen. Der Nachteil dieser Verbrennungstechnik gegenüber optimierten Otto-Motoren ist jedoch ein deutlich erhöhter Ausstoß von Ruß. Der Ruß ist besonders durch die Anlagerung polyzyklischer Aromate stark krebserregend, worauf mit verschiedenen Vorschriften bereits reagiert wurde. So wurden beispielsweise Abgas-Emissionsnormen mit Höchstgrenzen für die Rußemission erlassen. Um die Abgas-Emissionsnormen flächendeckend für Kraftfahrzeuge mit Dieselmotoren erfüllen zu können, besteht die Notwendigkeit, preisgünstige Sensoren herzustellen, die den Rußgehalt im Abgasstrom des Kraftfahrzeuges zuverlässig messen.

Der Einsatz derartiger Rußsensoren dient der Messung des aktuell ausgestoßenen Rußes, damit dem Motormanagement in einem Kraftfahrzeug in einer aktuellen Fahrsituation Informationen zukommen, um mit regelungstechnischen Anpassungen die Emissionswerte zu reduzieren. Darüber hinaus kann mit Hilfe der Rußsensoren eine aktive Abgasreinigung durch Abgas-Rußfilter eingeleitet werden oder eine Abgasrückführung zur Brennkraftmaschine erfolgen. Im Falle der Rußfilterung werden regenerierbare Filter verwendet, die einen wesentlichen Teil des Rußgehaltes aus dem Abgas herausfiltern. Benötigt werden Rußsensoren für die Detektion von Ruß, um die Funktion der Rußfilter zu überwachen bzw. um deren Regenerationszyklen zu steuern.

Dazu kann dem Rußfilter, der auch als Dieselpartikelfilter bezeichnet wird, ein Rußsensor vorgeschaltet sein und/oder ein Rußsensor nachgeschaltet sein.

Der dem Dieselpartikelfilter vorgeschaltete Sensor dient zur Erhöhung der Systemsicherheit und zur Sicherstellung eines Betriebes des Dieselpartikelfilters unter optimalen Bedingungen. Da dies in hohem Maße von der im Dieselpartikelfilter eingelagerten Rußmenge abhängt, ist eine genaue Messung der Partikelkonzentration vor dem Dieselpartikelfiltersystem, insbesondere die Ermittlung einer hohen Partikelkonzentration vor dem Dieselpartikelfilter, von hoher Bedeutung.

Ein dem Dieselpartikelfilter nachgeschalteter Rußsensor bietet die Möglichkeit, eine fahrzeugeigene Diagnose vorzunehmen und dient ferner der Sicherstellung des korrekten Betriebes der Abgasnachbehandlungsanlage.

Der Stand der Technik zeigt verschiedene Ansätze zur Detektion von Ruß. Ein in Laboratorien weithin verfolgter Ansatz besteht in der Verwendung der Lichtstreuung durch die Rußpartikel. Diese Vorgehensweise eignet sich für aufwändige Messgeräte. Wenn versucht wird, dies auch als mobiles Sensorsystem im Abgasstrang einzusetzen, muss festgestellt werden, dass Ansätze zur Realisierung eines optischen Sensors in einem Kraftfahrzeug mit sehr hohen Kosten verbunden sind. Weiterhin bestehen ungelöste Probleme bezüglich der Verschmutzung der benötigten optischen Fenster durch Verbrennungsabgase.

Die DE 195 36 705 Al offenbart eine Vorrichtung zur Messung von Rußpartikeln, wobei ein elektrisches Feld zwischen einer von dem Gasstrom durchströmten Mantel-Elektrode und einer Innen-Elektrode innerhalb dieser Mantel-Elektrode durch Anlegen einer konstanten elektrischen Gleichspannung erzeugt wird und der Ladestrom zur Aufrechterhaltung der konstanten Gleichspannung zwischen Mantel-Elektrode und Innen-Elektrode gemessen wird. Gute Messergebnisse werden im Rahmen der Offenbarung der DE 195 36 705 Al erzielt, wenn eine Gleichspannung von 2000 bis 3000 Volt zur Erzeugung des elektrischen Feldes verwendet wird.

Bei diesen elektrostatischen Rußsensoren ändert sich der Strom zwischen den beiden Elektroden in Abhängigkeit von der Rußkonzentration im Abgasstrom. Die hier auftretenden Ströme sind jedoch relativ klein und deren Stromstärke liegt in der Größenordnung von nA. Daher muss die gesamte Messanordnung für diese elektrostatischen Rußsensoren sehr hochohmig ausgeführt ausgebildet sein.

Die US 2009/0090622 A1 beschreibt ein System und benutzt ein Verfahren zur Diagnose von Partikelsensoren.

Aus der US 2010/0005880 A1 ist eine Vorrichtung zum Bestimmen und/oder Überwachen einer Prozessvariable bekannt.

Ein Problem, das bei der Messung von Rußpartikeln mit Hilfe von elektrostatischen Rußsensoren im Abgasstrang eines Kraftfahrzeuges besteht, ist, dass ein kalter Rußsensor, zum Beispiel nach dem Start eines erkalteten Verbrennungsmotors, nicht zur Rußmessung verwendet werden kann, da sich Kondenswasser aus dem Abgasstrom auf und in dem Rußsensor ablagert und diesen zunächst unstabil für einen Hochspannungsbetrieb macht, was eine zuverlässige Rußmessung ausschließt. Im Abgas eines Verbrennungsmotors ist immer ein hoher Anteil von Wasser in der Gasphase vorhanden, da die Kohlenwasserstoffe zum Beispiel aus dem Dieselkraftstoff vorwiegend zu Wasser und Kohlendioxyd verbrennen. Solange der Rußsensor kalt ist, kondensiert das Wasser aus dem Abgas zu flüssigen Wasser auf den Elektroden und dem Isolationskörper und stört damit die Rußmessung nachhaltig. Daher muss mit dem Beginn der Rußmessung so lange gewartet werden, bis der Rußsensor derart warm geworden ist, dass kein Wasser aus dem Abgasstrom mehr auskondensieren kann und das schon auskondensierte Wasser aus dem Rußsensor abgetrocknet ist. Zu diesem Zeitpunkt erfolgt die sogenannte Taupunktfreigabe für den Rußsensor . Ausschließlich anhand von Motormodellen in Verbindung mit einer Temperaturmessung im Abgasstrom kann nur eine sehr ungenaue Taupunktfreigabe erfolgen, da die vollständige Trocknung des Rußsensors von sehr vielen Faktoren (zum Beispiel Umgebungstemperatur des Fahrzeuges, Luftfeuchtigkeit der Ansaugluft, Gasmassenstrom im Abgasstrang) abhängt.

Es ist eine Aufgabe der vorliegenden Erfindung, einen elektrostatischer Rußsensor mit einer Spannungsversorgung und ein Verfahren zum Betreiben eines elektrostatischen Rußsensors mit einer Spannungsversorgung anzugeben, mit dem zuverlässig und genau die Messbereitschaft des elektrostatischen Rußsensors bestimmt werden kann. Der elektrostatische Rußsensor soll dabei möglichst kostengünstig herstellbar sein.

Die Aufgabe wird durch die Merkmale der unabhängigen Ansprüche 1 und 3 gelöst.

Dadurch, dass mit der Spannungsversorgung an die Guardelektrode ein Guardpotential angelegt ist, das in der Warmlaufphase des Rußsensors einem ersten Guardpotential entspricht und in der Messphase des Rußsensors einem zweiten Guardpotential entspricht, kann in der Warmlaufphase der gesamte Leckstrom von der ersten Elektrode zur zweiten Elektrode geführt werden. Dadurch wird es möglich die Leckstrommessung mit demselben Strommesselement durchzuführen, das auch genutzt wird, um dem vom Ruß hervorgerufenen Stromfluss während der Messphase zu bestimmen. Beim Erreichen der Messbereitschaft des Rußsensors, also der sogenannten Taupunktfreigabe, kann die Messphase beginnen in der das zweite Guardpotential dafür sorgt, dass alle eventuell noch fließenden Leckströme von der Guardelektrode abgeleitet werden und nicht zwischen der ersten Elektrode zur zweiten Elektrode fließen. Damit wird in der Messphase zwischen der der ersten Elektrode zur zweiten Elektrode ausschließlich der vom Ruß hervorgerufene Stromfluss vom Strommesselement erfasst. Dies stellt eine hohe Genauigkeit der Messergebnisse des Rußsensors sicher. Mit nur einem einzigen Strommesselement kann sowohl der Leckstrom während der Warmlaufphase, als auch der vom Ruß hervorgerufene Messstromfluss bestimmt werden. Da nur ein einziges Strommesselement verwendet wird, ist der elektrostatische Rußsensor kostengünstig herstellbar.

Erfindungsgemäß schaltet die Spannungsversorgung das an der Guardelektrode anliegende Guardpotential bei dem Erreichen einer Taupunktfreigabe von dem ersten Guardpotential auf das zweite Guardpotential um. Dadurch kann die Strommessung vor und nach der Taupunktfreigabe mit nur einem einzigen Strommesselement erfolgen, was die Herstellungskosten des Rußsensors erheblich senkt.

Bei einer Ausgestaltung liegt der Betrag des ersten Guardpotentials näher am Betrag des höheren elektrischen Potentials, das an der ersten Elektrode oder der zweiten Elektrode anliegt, als der Betrag des zweiten Guardpotentials. Damit kann die Guardelektrode nahezu den gesamten Leckstrom an die zweite Elektrode weiterleiten.

Im Folgenden wird die vorliegende Erfindung unter Bezugnahme auf die begleitenden Zeichnungen und anhand bevorzugter Ausführungsformen erläutert. Diese Ausführungsformen umfassen Rußsensoren für den Einsatz in einem Kraftfahrzeug. Es zeigen:
- Figur 1: einen Rußsensor,
- Figur 2: einen weiteren Rußsensor,
- Figur 3: eine erfindungsgemäßen Rußsensor, der mit dem erfindungsgemäßen Verfahren betrieben werden kann,
- Figur 4: beispielhaft die unterschiedlichen elektrischen Potentiale,
- Figur 5: ein Ersatzschaltbild des erfindungsgemäßen elektrostatischen Rußsensors,
- Figur 6: eine Strom-Zeit-Kurve, die von einem erfindungsgemäßen Rußsensor erzeugt wurde.

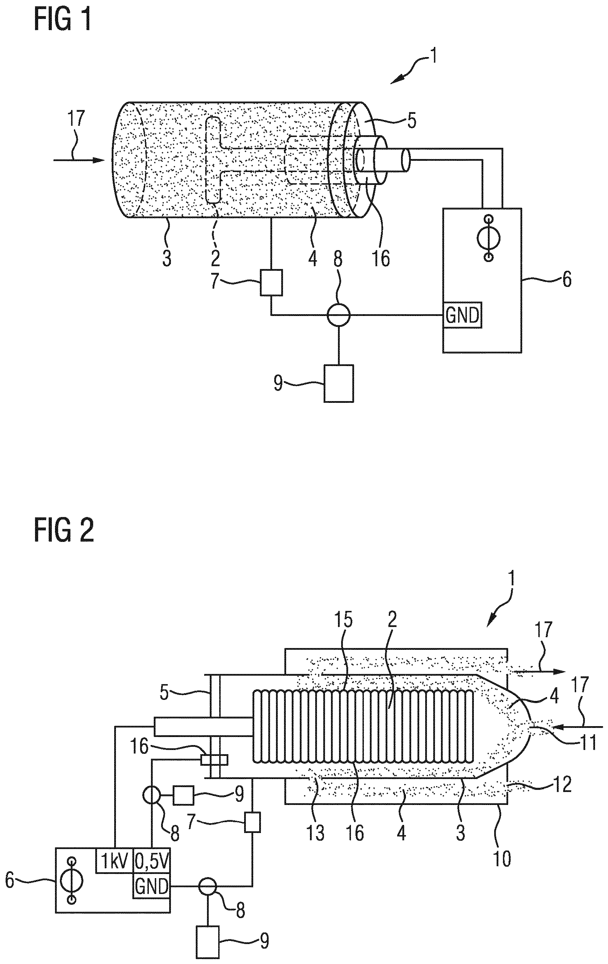

Figur 1 zeigt einen Rußsensor 1. Der Rußsensor 1 besteht aus einer ersten Elektrode 2, die im Inneren einer zweiten Elektrode 3 angeordnet ist. Zwischen der ersten Elektrode 2 und der zweiten Elektrode 3 befindet sich das Abgas 17 des Verbrennungsmotors, in dem Rußpartikel 4 enthalten sind. Die Konzentration der Rußpartikel 4 im Abgas 17 soll durch den Rußsensor 1 gemessen werden. Mit anderen Worten kann gesagt werden, dass mit dem Rußsensor 1 der Rußgehalt im Abgasstrom 17 bestimmt werden soll. Dazu wird eine Messspannung durch die Spannungsversorgung 6 zwischen der ersten Elektrode 2 und der zweiten Elektrode 3 angelegt. Diese Spannung resultiert aus einem erstes elektrisches Potential, das an die erste Elektrode 2 angelegt ist und einem zweiten elektrischen Potential, das an die zweite Elektrode 3 angelegt ist. Die erste Elektrode 2 ist von der zweiten Elektrode 3 mithilfe des Isolationskörpers 5 elektrisch isoliert. Der Isolationskörper 5 kann zum Beispiel als Scheibe aus einem keramischen Material aufgebaut sein. Darüber hinaus ist im Rußsensor 1 eine Guardelektrode 16 angeordnet, die in erster Linie zur Stabilisierung der Spannungsverhältnisse und elektrischen Potentiale im Rußsensor 1 genutzt wird und dafür sorgt, dass im Messbetrieb des Rußsensors 1 keine Leckströme zwischen der erste Elektrode 2 und der zweiten Elektrode 3 fließen. Leckströme sind unerwünschte Ströme, die infolge unzureichender Isolationseigenschaften über den Isolationskörper 5 im Messbetrieb des Rußsensors 1 fließen und damit die Messergebnisse des Rußsensors 1 wesentlich verfälschen. Im Rußmessbetrieb wird das Potential der Guardelektrode 16 etwas oberhalb des Potentials der zweiten Elektrode 3 eingestellt. Dadurch fließen eventuell vorhandene Leckströme zur Guardelektrode 16 und werden dort abgeleitet, ohne die Strommessung des Rußsensors 1 zu beeinflussen. Bei einer typischen Messkonfiguration liegt die zweite Elektrode 3 auf Ground-Potential GND, also auf 0 V, die Guardelektrode 16 auf etwas erhöhtem Potential, zum Beispiel auf 0,5 V und die erste Elektrode auf sehr hohem Potential, zum Beispiel 1000 V.

Weiterhin ist in Figur 1 zu erkennen, dass zwischen der Spannungsversorgung und der zweiten Elektrode 3 ein ohmscher Widerstand 7 geschaltet ist, der hochohmig ausgeführt ist, um die relativ kleinen Ströme zu messen, die sich aufgrund der Rußpartikel 4 zwischen der ersten Elektrode 2 und der zweiten Elektrode 3 ausbilden zu können. Die Messung dieser Ströme erfolgt durch das Strommesselement 8, das mit einer Auswerteelektronik 9 verbunden ist. Derartige Rußsensoren 1 werden zur On-Board-Diagnose in Kraftfahrzeugen mit Dieselmotoren eingesetzt.

Die Spannung die zwischen der ersten Elektrode 2 und der zweiten Elektrode 3 angelegt wird, ist relativ hoch, um verwertbare Messströme zu erhalten. Eine derartige Spannung liegt zwischen 100 V und 3 kV und ist damit relativ aufwendig zu kontrollieren.

Insbesondere Wasserablagerungen auf der ersten Elektrode 2 und der zweiten Elektrode 3, sowie auf dem Isolationskörper 5 können zu einer vollständigen Verfälschung der Rußmessung führen. Daher muss der Rußsensor 1 vor Beginn der Rußmessung völlig abgetrocknet sein, was durch die sogenannte Taupunktfreigabe signalisiert wird.

Figur 2 zeigt einen Rußsensor 1 mit einer ersten Elektrode 2 und einer zweiten Elektrode 3. Die erste Elektrode 2 ist von der zweiten Elektrode 3 durch einen Isolationskörper 5 elektrisch isoliert, und zwischen der ersten Elektrode 2 und der zweiten Elektrode 3 wird eine elektrische Spannung von 1 kV angelegt, die von der elektrischen Spannungsversorgung 6 erzeugt wird.

Rußpartikel 4, die in einem Abgasstrom von einer Brennkraftmaschine durch ein Auspuffrohr transportiert werden, können in den im Abgasstrang integrierten Rußsensor 1 eindringen. Die Rußpartikel 4 gelangen in ein elektrisches Feld, das sich auf Grund der angelegten elektrischen Spannung zwischen der ersten Elektrode 2 und der zweiten Elektrode 3 ausbildet. Um zwischen der ersten Elektrode 2 und der zweiten Elektrode 3 einen gut messbaren elektrischen Strom zu erzeugen, können auf der Oberfläche der ersten Elektrode 2 und/oder auf der Oberfläche der zweiten Elektrode 3 Elemente 15 zur Konzentration der elektrischen Feldstärke ausgebildet sein. In diesem Beispiel ist die erste Elektrode 2 als stabförmige Gewindestange ausgebildet, wobei die Elemente 15 zur Konzentration der elektrischen Feldstärke durch die Gewindegänge gebildet werden, zwischen denen dreieckige Spitzen ausgebildet sind. An diesen Spitzen wird das elektrische Feld konzentriert, womit die elektrische Feldstärke im Bereich der Spitzen sehr hoch wird. Die starke Erhöhung der elektrischen Feldstärke im Bereich der Spitzen kann die Durchbruchsfeldstärke des Gases in dem Bereich überschreiten. Beim Überschreiten der Durchbruchsfeldstärke des Gases werden elektrisch geladene Partikel gebildet, die in Richtung der entgegengesetzten Elektrode beschleunigt werden und infolge von Stoßionisationen zu einer lavinenartigen Ausbildung von Ladungsträgern führen. Wenn diese Ladungsträgerlavine eine Elektrodenoberfläche erreicht, ist ein sehr hoher Strom messbar, der gut ausgewertet werden kann und der proportional zur Anzahl der geladenen Partikel im Abgas ist.

Weiterhin zeigt aber Figur 2 einen Ohmschen Widerstand 7, der vorteilhaft ist, um mit der Auswerteelektronik 9 den elektrischen Strom messen zu können, der zwischen der ersten Elektrode 2 und der zweiten Elektrode 3 fließt. Darüber hinaus ist in Figur 2 eine Schutzkappe 10 zu erkennen, die zur gezielten Führung des AbGasstromes 17 durch den Rußsensor 1 dient. Die Abgase können beispielsweise durch eine erste Öffnung 11 in den Rußsensor 1 eindringen, wo zwischen der ersten Elektrode 2 und der zweiten Elektrode 3 der Rußgehalt im Abgas gemessen werden kann. Danach verlässt der Abgasstrom 17 durch die zweite Öffnung 12, die in der zweiten Elektrode 3 ausgebildet ist, den Rußsensor 1 und wird über die dritte Öffnung 13 zurück in den Hauptabgasstrom geführt.

In dem Isolationskörper 5 ist eine Guardelektrode 16 zu erkennen. Mit der Guardelektrode 16 kann vor dem Zeitpunkt der Taupunktfreigabe ein Strom gemessen werden, der als Indikator für einen Taupunktfreigabe des Rußsensors 1 ausgewertet werden kann. Der Strom wird von der Spannung an der ersten Elektrode 2 (in diesem Beispiel 1 kV) über den feuchten Isolationskörper hin zur Guardelektrode 16 getrieben, die in diesen Beispiel mit 0,5 V etwas gegen das Massepotential GND an der zweiten Elektrode 3 vorgespannt ist. Erst wenn dieser Strom deutlich, also um mindestens eine Zehnerpotenz, nach dem Start des kalten Verbrennungsmotors absinkt, kann auf eine vollständige Trocknung des Rußsensors 1 geschlossen werden und eine Taupunktfreigabe erfolgen. Bei dieser Art der Taupunktfreigabe sind jedoch mindestens zwei Strommesselemente 8, nämlich eines in der Leitung zwischen der Guardelektrode 16 und der Spannungsversorgung 6 und eines in der Leitung zwischen der ersten oder zweiten Elektrode 2, 3 und der Spannungsversorgung 6, notwendig, um den Rußsensor 1 zu betreiben. Die Anzahl der notwendigen Strommesselemente 8 erhöht die Kosten für den Rußsensors 1. Es ist jedoch in jeden Fall vorteilhaft, die Herstellungskosten für den Rußsensors 1 so gering wie möglich zu halten.

Es ist aber auch denkbar eine Strommessung zwischen der ersten Elektrode 2 und der zweiten Elektrode 3, also zwischen 1 kV und dem Massepotential GND, zu verwenden, um den Zeitpunkt der Taupunktfreigabe zu bestimmen. Auch hier wird das Absinken des Stromes um mindestens eine Zehnerpotenz als Zeichen für eine vollständige Trocknung das Rußsensors nach dem Start des kalten Verbrennungsmotors gewertet.

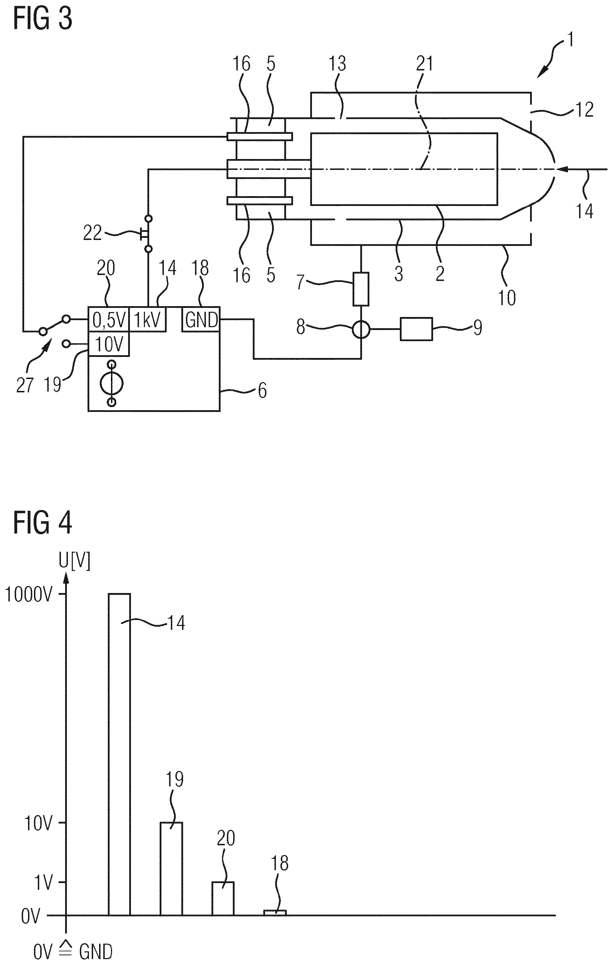

Fig. 3 zeigt einen erfindungsgemäßen Rußsensor 1 mit einer Spannungsversorgung 6. Der Rußsensor 1 weist eine erste Elektrode 2 und eine zweite Elektrode 3 auf. Die Rußpartikel können mit dem Abgasstrom 17 durch eine erste Öffnung 11, die in der Schutzkappe 10 ausgebildet ist, in den Innenraum des Rußsensors eindringen. Dabei gelangen die Rußpartikel in den Zwischenraum zwischen die erste Elektrode 2 und die zweite Elektrode 3. Darüber hinaus weist der erfindungsgemäße Rußsensor 1 eine Spannungsversorgung 6 auf, die mit Hilfe eines Umschaltelementes 27 an die Guardelektrode 16 zwei verschiedene Potentiale anlegen kann. Das mit der Spannungsversorgung 6 an die Guardelektrode 16 angelegte Guardpotential, entspricht in der Warmlaufphase des Rußsensors 1 einem ersten Guardpotential und in der Messphase des Rußsensors 1 einem zweiten Guardpotential. Das erste Guardpotential kann zum Beispiel 10 V gegen GND betragen und das zweite Guardpotential kann zum Beispiel 0,5 V gegen GND betragen

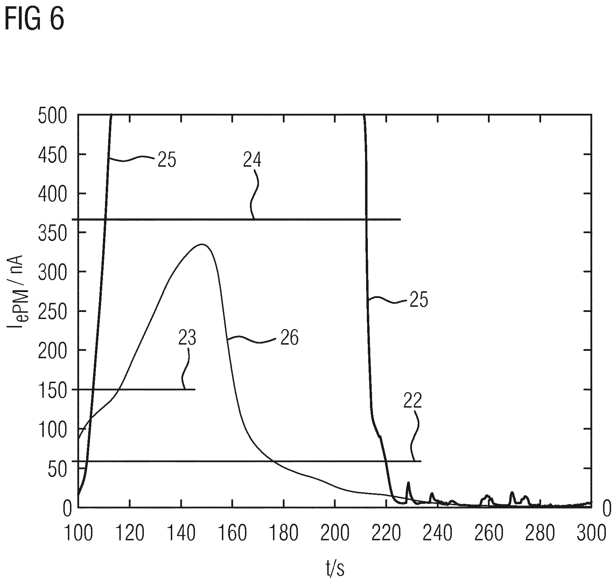

Solange der Abgassensor 1 kalt ist, was z. B. nach dem Neustart des Verbrennungsmotors der Fall sein wird, werden im Gasstrom 17 vorhandene Wassermoleküle als Kondensat im gesamten Rußsensor 1 abgeschieden. Dieses Wasserkondensat legt sich u. a. auf den Isolationskörper 5, wobei eine elektrisch leitende Verbindung zwischen der ersten Elektrode 2, der Guardelektrode 16 und der zweiten Elektrode 3 entsteht. Mithilfe der Spannungsversorgung 6 kann an die erste Elektrode 2 eine Hochspannung von z. B. 1000 V angelegt werden. Die zweite Elektrode 3 wird vorzugsweise auf Massepotential GND gehalten. Die Guardelektrode 16 wird auf ein erhöhtes Potential (erstes Guardpotential) gegenüber ihrem Potential (zweites Guardpotential) im Rußmessbetrieb gelegt. Das Potential der Guardelektrode 16 Rußmessbetrieb kann zum Beispiel bei 0.5 Volt liegen und das erhöhte Potential der Guardelektrode 16 kann bei 10 V liegen. Zur Umschaltung zwischen dem Potential der Guardelektrode 16 Rußmessbetrieb und dem erhöhten Potential der Guardelektrode 16 weist die Spannungsversorgung 6 ein zum Beispiel als elektronische Schaltung ausgebildetes Umschaltelement 27 auf. Aufgrund des Kondensats, das sich auf der Oberfläche des Isolationskörpers 5 gebildet hat, beginnt ein hoher Strom über den Isolationskörper 5 zu fließen. Dieser Strom, der infolge des Kondensats auf dem Isolationskörper zwischen der ersten Elektrode 2 über die Guardelektrode 16 zu der zweiten Elektrode 3 fließt, ist mindestens eine Zehnerpotenz höher als der Messstrom, der fließt, wenn der gesamte Rußsensor 1 völlig abgetrocknet ist. Der Leckstrom, der über den Isolationskörper 5 infolge des wässrigen Kondensats fließt, macht eine Rußmessung mit dem benetzten Rußsensor unmöglich. Dennoch kann dieser Strom beobachtet werden, um die Taupunktfreigabe des Rußsensors 1 zu detektieren und die Funktionsfähigkeit des Rußsensors 1 zu prüfen. Durch das erhöhte Potential der Guardelektrode 16 wird nur sehr wenig Leckstrom über die Guardelektrode 16 abfließen. Der Abtrocknungsprozess des Rußsensors kann daher sehr gut mit dem einzigen Strommesselement 8 in der GND Leitung beobachtet werden. Wenn sich dann der Rußsensor 1 infolge des heißen Abgases 17 derart angewärmt hat, dass sich das gesamte wässrige Kondensat aus dem Inneren des Rußsensors 1 entfernt hat, kann die Taupunktfreigabe erfolgen und die Messphase des Rußsensors einsetzen. Zur Strommessung weist das in Fig. 3 dargestellte System nur ein einziges Strommesselement 8 auf, das mit der Auswerteelektronik 9 verbunden ist. Diese Auswerteelektronik 9 kann die in den Figur 6 dargestellten Sensorströme aufzeichnen und auswerten.

Nach der Taupunktfreigabe kann die Messphase des Rußsensors 1 beginnen. Hierzu wird mit Hilfe des Umschaltelements 27 das zweite Guardpotential 20 an die Guardelektrode 16 angelegt. Da das zweite Guardpotential 20 mit zum Beispiel 0,5V nur sehr wenig vom GND Potential (0 V) der zweiten Elektrode 3 entfernt ist werden die verbleibenden Leckströme nahezu vollständig von der Guardelektrode 16 abgeleitete, wodurch die Messergebnisse des Rußsensors 1 durch die Leckströme nicht verfälscht werden.

Die Guardelektrode 16 ist in diesem Beispiel in den keramischen Isolationskörper 5 des Rußsensors 1 integriert. Der Isolationskörper 5 muss jedoch nicht notwendigerweise aus einer Keramik bestehen. Es ist auch denkbar, z. B. einen hitzefesten Kunststoff einzusetzen oder andere isolierende Materialien, wie z. B. Materialien aus dem Element Kohlenstoff in einer entsprechenden Kristallgitterstruktur, die zu einer hohen Isolation führt.

Figur 4 zeigt beispielhaft die unterschiedlichen elektrischen Potentiale die an den einzelnen Elektroden anliegen können. An der ersten Elektrode 2 kann das erste Potential 14 anliegen, das hier mit 1000 V gegen GND beispielhaft dargestellt ist. Dieses erste Potential kann aber auch zwischen 500 V und 3000 V liegen. An der zweiten Elektrode 3 liegt hier beispielhaft ein Potential von 0 V, also das Ground Potential GND, an. Die Potentiale können zwischen der ersten und der zweiten Elektrode wechseln, wichtig ist nur, dass eine hohe Spannung der ersten Elektrode 2 und der zweiten Elektrode 3 entsteht. Das Potential an der Guardelektrode 16 kann zwei Werte annehmen, was durch die Spannungsversorgung 6 in Verbindung mit dem Umschaltelement 27 sichergestellt wird. Der Betrag des ersten Guardpotentials 19 liegt näher am Betrag des höheren elektrischen Potentials, das in diesem Beispiel an der ersten Elektrode 2 anliegt, als der Betrag des zweiten Guardpotentials 20. Das erste Guardpotential 19 liegt hier beispielhaft bei 10 V gegen GND und das zweite Guardpotential 20 liegt hier beispielhaft bei 1 V gegen GND. Das erste Guardpotential 19 kann Werte zwischen 5 V und 200 V gegen GND annehmen und das zweite Guardpotential 20 kann Werte zwischen 0,2 V und 10 V gegen GND annehmen.

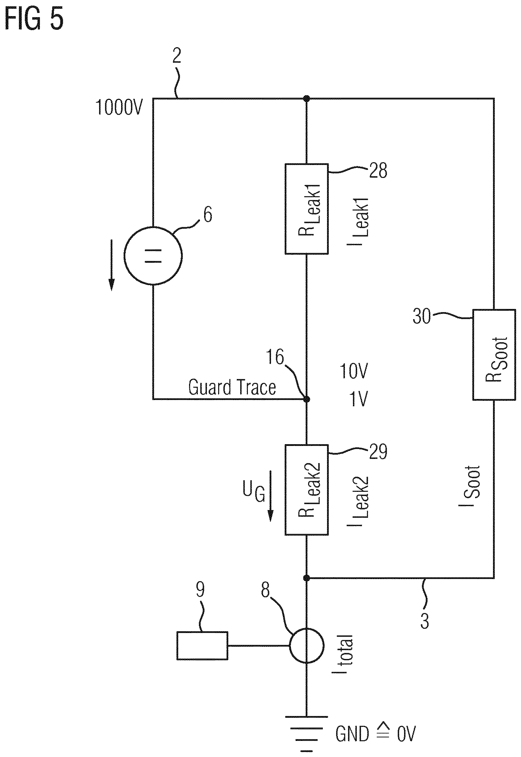

Figur 5 zeigt ein Ersatzschaltbild des erfindungsgemäßen elektrostatischen Rußsensors 1 mit einer Spannungsversorgung 6. Die Spannungsversorgung 6 legt an die erste Elektrode eine Hochspannung von 1000 V an und an die zweite Elektrode das Massepotential GND. Die Guardelektrode 16 wird wahlweise mit dem ersten Guardpotential (10 V) oder dem zweiten Guardpotential (1 V) belegt. In der Messphase des Rußsensors 1 fließt der Strom Isoot über den dritten Ersatzwiderstand 30 und kann von dem einzigen Strommesselement 8 erfasst werden und dieses Messergebnis kann von der Auswerteelektronik 9 weiterverarbeitet werden. Der Leckstrom Ileak1 wird fast vollständig von der Guardelektrode 16 aufgenommen, wie diese auf das zweite Guardpotential von 1 V geschaltet ist.

Vor der Taupunktfreigabe ist die Guardelektrode 16 auf das erste Guardpotential von 10 V geschaltet, wodurch der gesamte Leckstrom, also Ileak2 zur zweiten Elektrode geführt wird. Auf dem Weg zum Massepotential GND der zweiten Elektrode wird der gesamte Leckstrom Ileak2 von dem einzigen Strommesselement 8 erfasst und dieses Messergebnis kann wiederum von der Auswerteelektronik 9 ausgewertet und weiterverarbeitet werden.

Figur 6 zeigt zwei Strom-Zeit-Kurven, die mit dem erfindungsgemäßen elektrostatischen Rußsensor 1 erfasst wurden. Beide Strom-Zeit-Kurven wurden mit einem ersten Guardpotential (zum Beispiel 10 V) an der Guardelektrode 16 erfasst und stellen die Situation der Warmlaufphase des Rußsensors 1 vor der Taupunktfreigabe dar. Die Normalkurve 25 zeigt einen starken Stromanstieg nach dem Start der Brennkraftmaschine, weil sich Kondensat in dem Rußsensor 1 niederschlägt, das einen sehr hohen Leckstrom über den Isolierköper ermöglicht. Die Normalkurve 25 durchbricht bei ihrem Anstieg eine erste Schwelle 22, eine zweite Schwelle 23 und eine dritte Schwelle 24, um dann den Messbereich des Strommesselementes nach etwa 110 s zu verlassen. Die Trocknungsphase des Rußsensors 1 dauert etwa 220 s, dann unterschreitet die Normalkurve die erste Schwelle 22 und die Taupunktfreigabe kann erfolgen, woraufhin die Guardelektrode auf das zweite Guardpotential (zum Beispiel 0,5V) geschaltet wir und die Messphase des Rußsensors 1 beginnen kann.

Zur Fehlerdiagnose kann der Stromgradient dI/dt im abfallenden Zweig der Normalkurve 25 und/oder der Fehlerkurve 26 ausgewertet werden. Anhand dieses Stromgradienten kann zwischen einen intakten und einem fehlerhaften Rußsensor unterschieden werden.

Die Fehlerkurve 26 wurde ebenfalls mit einem ersten Guardpotential (zum Beispiel 10 V) an der Guardelektrode 16 erfasst und stellen damit ebenfalls die Situation der Warmlaufphase des Rußsensors 1 vor der Taupunktfreigabe dar. Jedoch zeigt der Strom-Zeit-Verlauf der Fehlerkurve 26 ein völlig untypisches Verhalten. Der gemessene Strom überschreitet zwar nach etwa 110 2 eine zweite Schwelle 23, erreicht aber die dritte Schwell 24 nicht, um dann nach etwa 170 s unter die erste Schwelle 22 zu fallen. Dieser völlig untypische Stromverlauf in der Warmlaufphase identifiziert einen fehlerhaften Rußsensor 1. An die On Board Diagnoseeinheit des Kraftfahrzeuges kann eine Fehlermeldung versendet werden und der Fahrzeugführer kann aufgefordert werden eine Werkstatt aufzusuchen, um den defekten Rußsensor 1 erneuern zu lassen.

## Patentansprüche

1. Elektrostatischer Rußsensor (1) mit einer Spannungsversorgung (6), wobei der elektrostatische Rußsensor (1) eine erste Elektrode (2), eine zweite Elektrode (3) in deren Inneren die erste Elektrode angeordnet ist, und eine Guardelektrode (16) aufweist, wobei die erste Elektrode (2) und die zweite Elektrode (3) durch einen Isolationskörper (5) elektrisch voneinander isoliert sind und zwischen der ersten Elektrode (2) und der zweiten Elektrode (3) die Guardelektrode (16) angeordnet ist, wobei auch die Guardelektrode (16) durch den Isolationskörper (5) elektrisch von der ersten Elektrode (2) und der zweiten Elektrode (3) isoliert ist, wobei mit der Spannungsversorgung (6) ein erstes elektrisches Potential (14) an die erste Elektrode (2) angelegt ist und wobei mit der Spannungsversorgung (6) ein zweites elektrisches Potential (18) an die zweite Elektrode (2) angelegt ist, sodass eine elektrischen Spannung zwischen der ersten Elektrode (2) und der zweiten Elektrode (3) entsteht, **dadurch gekennzeichnet, dass** mit der Spannungsversorgung (6) an die Guardelektrode (16) ein Guardpotential angelegt ist, das in der Warmlaufphase des Rußsensors (1) einem ersten Guardpotential (19) entspricht und in der Messphase des Rußsensors (1) einem zweiten Guardpotential (20) entspricht, wobei die Spannungsversorgung (6) das an der Guardelektrode (16) anliegende Guardpotential mit dem Erreichen einer Taupunktfreigabe von dem ersten Guardpotential (19) auf das zweiten Guardpotential (20) umschaltet.

2. Elektrostatischer Rußsensor (1) mit einer Spannungsversorgung (6) nach Anspruch 1, **dadurch gekennzeichnet, dass** der Betrag des ersten Guardpotentials (19) näher am Betrag des höheren elektrischen Potentials, welches an der ersten Elektrode (2) oder der zweiten Elektrode (3) anliegt, liegt als der Betrag des zweiten Guardpotentials (20).

3. Verfahren zum Betreiben eines elektrostatischen Rußsensors (1) mit einer Spannungsversorgung (6), wobei der elektrostatische Rußsensor (1) eine erste Elektrode (2), eine zweite Elektrode (3) in deren Inneren die erste Elektrode angeordnet ist, und eine Guardelektrode (16)aufweist, wobei die erste Elektrode (2) und die zweite Elektrode (3) durch einen Isolationskörper (5) elektrisch voneinander isoliert sind und zwischen der ersten Elektrode (2) und der zweiten Elektrode (3) die Guardelektrode (16) angeordnet ist, wobei auch die Guardelektrode (16) durch den Isolationskörper (5) elektrisch von der ersten Elektrode (2) und der zweiten Elektrode (3) isoliert ist, wobei mit der Spannungsversorgung (6) ein erstes elektrisches Potential (14) an die erste Elektrode (2) angelegt wird und wobei mit der Spannungsversorgung (6) ein zweites elektrisches Potential (18) an die zweite Elektrode (2) angelegt wird, sodass eine elektrischen Spannung zwischen der ersten Elektrode (2) und der zweiten Elektrode (3) entsteht, **dadurch gekennzeichnet, dass**
mit der Spannungsversorgung (6) an die Guardelektrode (16) ein Guardpotential angelegt wird, das in der Warmlaufphase des Rußsensors (1) einem ersten Guardpotential (19) entspricht und in der Messphase des Rußsensors (1) einem zweiten Guardpotential (20) entspricht, wobei die Spannungsversorgung (6) das an der Guardelektrode (16) anliegende Guardpotential mit dem Erreichen einer Taupunktfreigabe von dem ersten Guardpotential (19) auf das zweiten Guardpotential (20) umschaltet.

4. Verfahren zum Betreiben eines elektrostatischer Rußsensors (1) mit einer Spannungsversorgung (6) nach Anspruch 3, **dadurch gekennzeichnet, dass** der Betrag des ersten Guardpotentials (19) näher am Betrag des höheren elektrischen Potentials, welches an der ersten Elektrode (2) oder der zweiten Elektrode (3) anliegt, liegt als der Betrag des zweiten Guardpotentials (20).

5. Elektrostatischer Rußsensor (1) mit einer Spannungsversorgung (6) nach einem der Ansprüche 1 und 2, **dadurch gekennzeichnet, dass** ein Stromgradient dI/dt im abfallenden Zweig der Normalkurve (25) und/oder der Fehlerkurve (26) ausgewertet wird und anhand dieses Stromgradienten zwischen einem intakten und einem fehlerhaften Rußsensor unterschieden wird.

6. Verfahren zum Betreiben eines elektrostatischen Rußsensors (1) mit einer Spannungsversorgung (6) nach einem der Ansprüche 3 und 4, **dadurch gekennzeichnet, dass** kann ein Stromgradient dI/dt im abfallenden Zweig der Normalkurve (25) und/oder der Fehlerkurve (26) ausgewertet wird und anhand dieses Stromgradienten kann zwischen einem intakten und einem fehlerhaften Rußsensor unterschieden wird.

## Claims

1. Electrostatic soot sensor (1) having a voltage supply (6), wherein the electrostatic soot sensor (1) has a first electrode (2), a second electrode (3), in the interior of which the first electrode is arranged, and a guard electrode (16), wherein the first electrode (2) and the second electrode (3) are electrically insulated from one another by means of an insulating body (5), and the guard electrode (16) is arranged between the first electrode (2) and the second electrode (3), wherein the guard electrode (16) is also electrically insulated from the first electrode (2) and the second electrode (3) by the insulating body (5), wherein a first electrical potential (14) is applied to the first electrode (2) with the voltage supply (6), and wherein a second electrical potential (18) is applied to the second electrode (2) with the voltage supply (6), with the result that an electrical voltage is brought about between the first electrode (2) and the second electrode (3), **characterized in that** a guard potential, which corresponds to a first guard potential (19) in the warm-up phase of the soot sensor (1) and to a second guard potential (20) in the measuring phase of the soot sensor (1), is applied to the guard electrode (16) with the voltage supply (6), wherein the voltage supply (6) switches the guard potential present at the guard electrode (16) from the first guard potential (19) to the second guard potential (20) when a dew point release is brought about.

2. Electrostatic soot sensor (1) having a voltage supply (6) according to Claim 1, **characterized in that** the absolute value of the first guard potential (19) is closer to the absolute value of the relatively high electrical potential which is present at the first electrode (2) or the second electrode (3) than the absolute value of the second guard potential (20).

3. Method for operating an electrostatic soot sensor (1) having a voltage supply (6), wherein the electrostatic soot sensor (1) has a first electrode (2), a second electrode (3), in the interior of which the first electrode is arranged, and a guard electrode (16), wherein the first electrode (2) and the second electrode (3) are electrically insulated from one another by an insulating body (5), and the guard electrode (16) is arranged between the first electrode (2) and the second electrode (3), wherein the guard electrode (16) is also electrically insulated from the first electrode (2) and the second electrode (3) by the insulating body (5), wherein a first electrical potential (14) is applied to the first electrode (2) with the voltage supply (6), and wherein a second electrical potential (18) is applied to the second electrode (2) with the voltage supply (6), with the result that an electrical voltage is brought about between the first electrode (2) and the second electrode (3), **characterized in that** a guard potential, which corresponds to a first guard potential (19) in the warm-up phase of the soot sensor (1) and corresponds to a second guard potential (20) in the measuring phase of the soot sensor (1), is applied to the guard electrode (16) with the voltage supply (6), wherein the voltage supply (6) switches the guard potential which is present at the guard electrode (16) from the first guard potential (19) to the second guard potential (20) when a dew point release is brought about.

4. Method for operating an electrostatic soot sensor (1) having a voltage supply (6) according to Claim 3, **characterized in that** the absolute value of the first guard potential (19) is closer to the absolute value of the relatively high electrical potential which is present at the first electrode (2) or the second electrode (3) than the absolute value of the second guard potential (20).

5. Electrostatic soot sensor (1) having a voltage supply (6) according to either of Claims 1 and 2, **characterized in that** a current gradient dI/dt in the dropping branch of the normal curve (25) and/or of the fault curve (26) is evaluated, and on the basis of this current gradient a distinction is made between a faultless and a faulty soot sensor.

6. Method for operating an electrostatic soot sensor (1) having a voltage supply (6) according to either of Claims 3 and 4, **characterized in that** a current gradient dI/dt in the dropping branch of the normal curve (25) and/or of the fault curve (26) is evaluated, and on the basis of this current gradient a distinction is made between a faultless and a faulty soot sensor.

## Revendications

1. Capteur de suie (1) électrostatique comprenant une alimentation électrique (6), le capteur de suie (1) électrostatique possédant une première électrode (2), une deuxième électrode (3) à l'intérieur de laquelle est disposée la première électrode et une électrode de garde (16), la première électrode (2) et la deuxième électrode (3) étant isolées l'une de l'autre par un corps isolant (5) et l'électrode de garde (16) étant disposée entre la première électrode (2) et la deuxième électrode (3), l'électrode de garde (16) étant elle aussi isolée électriquement de la première électrode (2) et de la deuxième électrode (3) par le corps isolant (5), un premier potentiel électrique (14) étant appliqué à la première électrode (2) par l'alimentation électrique (6) et un deuxième potentiel électrique (18) étant appliqué à la deuxième électrode (2) par l'alimentation électrique (6), de sorte qu'une tension électrique se produit entre la première électrode (2) et la deuxième électrode (3), **caractérisé en ce qu'**un potentiel de garde est appliqué à l'électrode de garde (16) avec l'alimentation électrique (6), lequel correspond à un premier potentiel de garde (19) dans la phase de mise en chauffe du capteur de suie (1) et correspond à un deuxième potentiel de garde (20) dans la phase de mesure du capteur de suie (1), l'alimentation électrique (6) permutant le potentiel de garde appliqué à l'électrode de garde (16) du premier potentiel de garde (19) au deuxième potentiel de garde (20) lorsqu'une validation de point de condensation est atteinte.

2. Capteur de suie (1) électrostatique comprenant une alimentation électrique (6) selon la revendication 1, **caractérisé en ce que** la valeur du premier potentiel de garde (19) est plus proche de la valeur du potentiel électrique plus élevé qui est appliqué à la première électrode (2) ou à la deuxième électrode (3) que de la valeur du deuxième potentiel de garde (20).

3. Procédé pour faire fonctionner un capteur de suie (1) électrostatique comprenant une alimentation électrique (6), le capteur de suie (1) électrostatique possédant une première électrode (2), une deuxième électrode (3) à l'intérieur de laquelle est disposée la première électrode et une électrode de garde (16), la première électrode (2) et la deuxième électrode (3) étant isolées l'une de l'autre par un corps isolant (5) et l'électrode de garde (16) étant disposée entre la première électrode (2) et la deuxième électrode (3), l'électrode de garde (16) étant elle aussi isolée électriquement de la première électrode (2) et de la deuxième électrode (3) par le corps isolant (5), un premier potentiel électrique (14) étant appliqué à la première électrode (2) par l'alimentation électrique (6) et un deuxième potentiel électrique (18) étant appliqué à la deuxième électrode (2) par l'alimentation électrique (6), de sorte qu'une tension électrique se produit entre la première électrode (2) et la deuxième électrode (3), **caractérisé en ce qu'**un potentiel de garde est appliqué à l'électrode de garde (16) avec l'alimentation électrique (6), lequel correspond à un premier potentiel de garde (19) dans la phase de mise en chauffe du capteur de suie (1) et correspond à un deuxième potentiel de garde (20) dans la phase de mesure du capteur de suie (1), l'alimentation électrique (6) permutant le potentiel de garde appliqué à l'électrode de garde (16) du premier potentiel de garde (19) au deuxième potentiel de garde (20) lorsqu'une validation de point de condensation est atteinte.

4. Procédé pour faire fonctionner un capteur de suie (1) électrostatique comprenant une alimentation électrique (6) selon la revendication 3, **caractérisé en ce que** la valeur du premier potentiel de garde (19) est plus proche de la valeur du potentiel électrique plus élevé qui est appliqué à la première électrode (2) ou à la deuxième électrode (3) que de la valeur du deuxième potentiel de garde (20).

5. Capteur de suie (1) électrostatique comprenant une alimentation électrique (6) selon l'une des revendications 1 et 2, **caractérisé en ce qu'**un gradient de courant dI/dt dans la branche descendante de la courbe normale (25) et/ou de la courbe de défaut (26) est interprété et la différence entre un capteur de suie intact et un capteur de suie défectueux est faite à l'aide de ce gradient de courant.

6. Procédé pour faire fonctionner un capteur de suie (1) électrostatique comprenant une alimentation électrique (6) selon l'une des revendications 3 et 4, **caractérisé en ce qu'**un gradient de courant dI/dt dans la branche descendante de la courbe normale (25) et/ou de la courbe de défaut (26) est interprété et la différence entre un capteur de suie intact et un capteur de suie défectueux est faite à l'aide de ce gradient de courant.
